# EUROPÄISCHE PATENTANMELDUNG

(11) **EP 4 592 443 A1**
(43) Veröffentlichungstag der Anmeldung: **30.07.2025**
(21) Anmeldenummer: 25150786.9
(22) Anmeldetag: 08.01.2025
(51) Int. Cl.: D06F 95/00, F16L 59/02, D06F 39/04, D06F 58/26, A47L 15/42, D06F 39/12, D06F 39/30

(54) **MEDIENAGGREGAT FÜR WÄSCHEREIEN MIT EINER DÄMMEINRICHTUNG**

(30) Priorität: 24.01.2024 DE 202024100354 U
(71) Anmelder: GrafTech GmbH, 19053 Schwerin (DE)
(72) Erfinder: Graf, Christian, 19053 Schwerin (DE); Bringewatt, Wilhelm, 32312 Lübbecke (DE)
(74) Vertreter: Walther Bayer Faber Patentanwälte PartGmbB

(57) **Zusammenfassung**

Die Erfindung betrifft ein Medienaggregat (100) für Wäschereien, das eine Wärmeerzeugungs-einrichtung für zumindest einen Wäschebehandlungsautomaten (1) und ein Gehäuse (10) aufweist, wobei das Gehäuse (10) die Wärmeerzeugungseinrichtung umschließt. Erfindungsgemäß weist das Gehäuse (10) auf der Außenseite eine Dämmeinrichtung (11) zur Wärme- und Schallisolierung auf. Die Erfindung betrifft weiterhin eine solche Dämmeinrichtung (11) für Medienaggregate (100).

## Beschreibung

Die Erfindung betrifft ein Medienaggregat für Wäschereien, das eine Wärmeerzeugungseinrichtung für zumindest einen Wäschebehandlungsautomaten und ein Gehäuse aufweist, wobei das Gehäuse die Wärmeerzeugungseinrichtung umschließt.

### STAND DER TECHNIK

Wäscherein sind mit in der Regel mehreren Wäschebehandlungsautomaten eingerichtet, die mit verschiedenen Medien betrieben werden. Beispielsweise werden Taktwaschanlagen mit raumtemperiertem Wasser oder Warmwasser versorgt, wobei im Nachgang der eigentlichen Wäsche zur Trocknung und zum Mangeln oder Bügeln entsprechende Wäschebehandlungsautomaten eingerichtet sind, die mit Heißdampf oder Heißluft betrieben werden, das oder die über Medienaggregate zur Verfügung gestellt wird.

Ein Wäschebehandlungsautomat, beispielsweise ein Trockner, eine Mangel oder ein Tunnelfinisher wird in der Regel direkt gekoppelt mit dem Medienaggregat betrieben, beispielsweise kann das Medienaggregat oberseitig auf dem Wäschebehandlungsautomaten installiert werden, um Heißluft oder Heißdampf unmittelbar dem Wäschebehandlungsautomaten zuzuführen. Derartige Medienaggregate sind häufig dazu eingerichtet, einen Teil einer Umluft mit einer aufgeheizten Frischluft zu mischen, wobei es auch Medienaggregate gibt, die einen Fortluftanschluss aufweisen, um Fortluft aus dem Wäschebehandlungsautomaten beispielsweise deckenseitig herauszuführen.

Ein Beispiel eines Medienaggregates in Verbindung mit einem Wäschebehandlungsautomaten zeigt die DE 10 2006 008 993 A1. Der darin bekannt gewordene Wäschebehandlungsautomat betrifft eine Muldenmangel, und über die Mangelstrecke werden verschiedene Temperaturniveaus benötigt. Zur Beheizung der darin gezeigten mehreren Mangelmulden dienen mehrere Brenner eines zugeordneten Medienaggregates, und über Zulaufleitungen kann Heißluft an die Mangelmulden geführt werden. Dabei wird das Abgas der Brenner jeder der Heizeinrichtungen genutzt, um die Mangelzuluft vorzuwärmen. Da das Abgas der Heizeinrichtung eine höhere Temperatur aufweist als die Luft der Muldenmangel, kann mit dem Abgas der jeweiligen Heizeinrichtung eine besonders wirksame Vorwärmung der Mangelluft ohne die Umwälzung eines großen Volumens derselben erfolgen.

Thermische und/oder akustische Dämmeinrichtungen sind für Medienaggregate, die in Wäscherein eingerichtet sind, nicht bekannt. Medienaggregate weisen in der Regel ein Gehäuse auf, das die Wärmeerzeugungseinrichtung, also beispielsweise in Form von Brennern der Heizeinrichtung, umschließt. Durch die Gehäuseflächen werden dabei Rohre, Leitungen oder Bedienelemente hindurchgeführt oder diese sind am Gehäuse befestigt, sodass die Außenhülle eines Medienaggregates in der Regel einen komplexen Gegenstand bildet. Die Wärmeerzeugungseinrichtung kann alternativ zu einem mit Gas oder Öl betreibbaren Brenner auch eine elektrische Beheizung aufweisen oder es kann ein hochtemperiertes Medium extern zugeführt werden. In der Regel weisen die Wärmeerzeugungseinrichtungen in den Medienaggregaten, die auch vereinfacht als Medienteile bezeichnet werden, einen Öl- oder vorzugsweise Gasbrenner auf.

In Zusammenhang mit Wäschebehandlungsautomaten von Wäscherein sind Isolierungen bekannt, die geräteintern eingerichtet sind, siehe beispielsweise die DE 10 2008 051 852 A1. Hieraus bekannt ist eine Dampfbügelmaschine, also beispielsweise für textiles Bügelgut, mit einem Dampf-Versorgungsanschluss, wenigstens einem ersten Bügelformkörper, der Dampf an ein Bügelgut abgeben kann, und mehreren Bauteilen, die Dampf vom Dampf-Versorgungsanschluss zum Bügelformkörper führen. Dabei ist eine Isolationskammer vorgesehen, in der mehrere der dampfführenden Bauteilen angeordnet sind. Ein Wäscherei-Medienaggregat ist damit nicht bekannt, das eine thermische oder akustische Isoliereinrichtung aufweist.

Medienaggregate werden also zumeist mit Gas oder Öl als Brennstoff betrieben und dienen wie vorstehend beschrieben zur Bereitstellung von heißer Luft oder Heißdampf. Diese oder dieser soll möglichst mit einem hohen Wirkungsanteil dem Wäschebehandlungsautomaten zugeführt werden, wobei es in der Regel unvermeidlich ist, dass sich ein Verlustanteil durch Wärmeabgabe über das Gehäuse des Medienaggregates einstellt.

### OFFENBARUNG DER ERFINDUNG

Aufgabe der Erfindung ist die Verbesserung eines Medienaggregates für Wäschereien, das möglichst eine optimale Ausnutzung der zugeführten Energie ermöglicht, und ferner möglichst geräuscharm betrieben werden kann. Insbesondere soll das Medienaggregat für Wäscherein so weitergebildet werden, dass die Aufgabe der Erfindung auch durch ein Nachrüsten bestehender Medienaggregate gelöst werden kann.

Diese Aufgabe wird ausgehend von einem Medienaggregat für Wäschereien gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Gehäuse auf der Außenseite eine Dämmeinrichtung zur Wärme- und Schallisolierung aufweist. Die Außenseite ist dabei die Seite des Gehäuses, die nach außen weist und damit die Außenhaut oder Außenhülle des Medienaggregates bildet. Insbesondere weist damit das Medienaggregat auf der Außenseite seines Gehäuses die Isolierung auf, die insofern einen Teil des Medienaggregates bildet, dieses also mit einer Schall und Wärme isolierenden Dämmeinrichtung ausgestattet ist.

Kerngedanke der Erfindung ist die außenseitige Anbringung einer Dämmeinrichtung auf der Oberfläche des Gehäuses des Medienaggregates, was auch im Rahmen einer Nachrüstung einer Dämmung bei bestehenden Medienaggregaten erfolgen kann. Die Dämmeinrichtung kann dabei sowohl thermische als auch akustische Dämmeigenschaften aufweisen. Dabei ist erfindungsgemäß die Dämmeinrichtung hinsichtlich ihrer Form und Größe so angepasst, dass die Dämmeinrichtung im Wesentlichen vollständig, aber zumindest überwiegend, an der Außenseite des Gehäuses anliegen kann. Im Wesentlichen kann die Dämmeinrichtung als Flächenkörper verstanden werden, der ein Format aufweist, das zumindest im Zustand der angebrachten Dämmeinrichtung dem Format der Außenseite des Gehäuses des Medienaggregates entspricht. Mit der erfindungsgemäß angeordneten Dämmeinrichtung wird nicht nur der Vorteil erreicht, dass bereits sich im Einsatz befindende Medienaggregate nachträglich mit einer Dämmeinrichtung ausgestattet werden können, sondern es ergibt sich auch der Vorteil, dass die Dämmeinrichtung den Anteil an Konvektionswärmeverlust über das Gehäuse des Medienaggregates minimieren kann und den Betrieb des Medienaggregates leiser werden lässt, da die Dämmeinrichtung so ausgestaltet ist, dass mit der thermischen Dämmwirkung auch eine akustische Dämmwirkung einhergeht.

Neben dem energetisch verbesserten Betrieb des Medienaggregates ergeben sich vor allem durch die Wärme- und Schallisolierung weitere Vorteile, da die Medienaggregate bisweilen frei stehende Aggregate in einer Betriebseinrichtung der Wäscherei bilden. So ergeben sich die folgenden wesentlichen Vorteile der Dämmeinrichtung: es kommt zunächst zu einer Reduzierung des Energieverbrauches bei jeder Beheizungsart des Medienaggregates; zudem erfolgt eine Reduzierung der Schallemission, wodurch sich insbesondere eine bessere Ergonomie an den Arbeitsplätzen ergibt, insbesondere bei heißen Tagen im Sommer, da sich eine geringere Wärmeabgabe an die Umgebung, also in die Produktionshalle und folglich an den Arbeitsplätzen ergibt. Als weitere Folge ergibt sich eine Erhöhung der Lebensdauer der elektrischen und/oder elektronischen Komponenten der weiteren Einrichtungen innerhalb der Wäscherei, insbesondere also der Wäschebehandlungsautomaten, aufgrund der Reduzierung der Produktionshalleninnentemperatur, was insbesondere für die Bereiche nahe der Medienteile gilt, also konkret in der Nähe oder im Trockner, also z.B. der Komponenten im Trockner-Schaltschrank.

Sofern eine definierte Menge an Heißluft dem Wäschebehandlungsautomaten bereitgestellt werden muss, kann mit einer erfindungsgemäßen Dämmeinrichtung der Wärmeerzeugungseinrichtung innerhalb des Gehäuses des Medienaggregates weniger Brennstoff zugeführt werden, da der Verlustanteil an Konvektionswärme verringert wird. Insbesondere dann, wenn das Medienaggregat oberseitig auf einem Wäschebehandlungsautomaten aufgesetzt angeordnet ist, und die Warmluft über bzw. durch die unterseitige Aufstandsfläche des Medienaggregates mittels Rohrleitungen oder Tunnelführungen an den Wäschebehandlungsautomaten übergeben werden kann, kann die Anbringung der Dämmeinrichtung an den verbleibenden, freien Gehäuseflächen hinreichend sein, da folglich eine bodenseitige Dämmung des Gehäuses des Medienaggregates nicht möglich und auch nicht notwendig ist.

Die Dämmeinrichtung kann zumindest ein Dämmelement aufweisen, das auf der Außenseite des Gehäuses anliegt. Das Dämmelement ist beispielsweise flächenartig und/oder mattenartig ausgebildet und weist einen Kernkörper und einen den Kernkörper umschließenden Hüllkörper auf. Die Dämmeinrichtung kann eine entsprechend den vorhandenen Gehäuseflächen des Gehäuses des Medienaggregates bestimmte Anzahl an Dämmelementen umfassen, die einzeln bereitgestellt und auf den Gehäuseflächen des Gehäuses aufgebracht werden. Anschließend können die Dämmelement miteinander verbunden werden.

Es ist auch denkbar, dass die Dämmeinrichtung mehrere miteinander verbundene Dämmelemente aufweist, wenigstens zwei, die gemeinsam an beispielsweise zueinander winklig ausgeführte Gehäuseflächen des Gehäuses aufgebracht werden. Hierfür können zwischen zumindest zwei Dämmelementen Verbindungsmittel eingerichtet sein, die die zumindest zwei Dämmelemente entweder dauerhaft miteinander verbinden, gewissermaßen gelenkig verbinden, oder die Verbindungsmittel sind lösbar ausgeführt, sodass mittels der Verbindungsmittel die Dämmelemente nach dem Anlegen auf der Außenseite des Gehäuses miteinander verbunden werden. So können die Verbindungsmittel beispielsweise Kletteinrichtungen, Knöpfeinrichtungen, Druckknöpfe, Laschen oder beispielsweise auch Reißverschlüsse umfassen. So wird es möglich, dass dann, wenn das Gehäuse mehrere Gehäuseflächen aufweist, mehrere Dämmelemente mit einem jeweiligen Format so ausgeführt werden, dass diese an die Gehäuseflächen angepasst sind und die Dämmeinrichtung mit den mehreren Dämmelementen das Gehäuse im Wesentlichen vollständig umschließt. Dabei können zwischen den Dämmelementen dauerhaft wirkende Verbindungsmittel eingerichtet sein, beispielsweise indem das Flächenmaterial des Hüllkörpers durchgehend ausgebildet ist und die zueinander getrennten Dämmelemente durch jeweilige Kernkörper gebildet sind. Alternativ können die Verbindungsmittel auch lösbar ausgeführt sein, und sind die mehreren Dämmelemente auf der Außenseite des Gehäuses des Medienaggregates aufgelegt worden, werden die Verbindungsmittel genutzt, um die Dämmelemente miteinander zu verbinden, beispielsweise mit Klettband.

So ist es möglich, dass mehrere Dämmelemente mit den Verbindungsmitteln zusammengehalten sind, derart, dass diese mehreren Dämmelemente in zusammenhängendem Zustand an die Gehäuseflächen des Gehäuse angeordnet werden können. Grenzen erst nach dem Anbringen einzelne Dämmelemente aneinander an, können an diesen Grenzflächen die lösbaren Verbindungsmittel eingerichtet sein, um die Dämmelemente wiederum miteinander zu verbinden. So kann die Dämmeinrichtung sowohl dauerhafte Verbindungsmittel zwischen den Dämmelementen aufweisen, die nur eine bewegliche bzw. gelenkartige Verbindung bilden und zudem können Verbindungsmittel vorgesehen sein, die lösbar ausgeführt sind.

Mit weiterem Vorteil ist es möglich, dass die Dämmelemente Magnetelemente, insbesondere kompakte Permanentmagnete oder Flächenmagnete aufweisen, mit denen die Dämmelemente auf der Gehäusefläche des Gehäuses befestigbar sind. So können die Dämmelemente gewissermaßen an die Gehäuseflächen angehaftet oder angeklickt werden, und beispielsweise kann zumindest eine Seite der Dämmelemente einen Hüllkörper aufweisen, der insgesamt magnetisch ist oder der an einzelnen Positionen, beispielsweise in seine vier Ecken, Magnetelemente aufweist, die an das magnetische Material des Gehäuses angeheftet werden. Auf diese Weise kann die Dämmeinrichtung auch einfach gelöst werden, beispielsweise zu Wartungszwecken.

Der Kernkörper kann beispielsweise eine Mineralwolle aufweisen, insbesondere mit einer Flächendicke von 20mm bis 150mm, vorzugsweise von 30mm bis 100mm, besonders bevorzugt von 40mm bis 70mm und am meisten bevorzugt von beispielsweise 45mm bis 55mm, insbesondere 50mm.

Hingegen kann der Hüllkörper des Dämmelementes ein Glasfasergewebe aufweisen, insbesondere ein Glasfasergewebe mit einer nicht brennbaren Eigenschaft und einem Flächengewicht von beispielsweise 400g/m2 bis 800g/m2, vorzugsweise von 500g/m2 bis 700g/m2 und besonders bevorzugt von 550g/m2 bis 600g/m2. Die Magnetelemente können, sofern vorhanden, auf der Innenseite des Glasfasergewebes angebracht sein, beispielsweise über entsprechend aufgenähte Laschen oder Taschen, sodass das Glasfasergewebe insgesamt an der Gehäusefläche des Gehäuses anliegt. Glasfasergewebe ist insbesondere thermisch stabil und kann für Temperaturen bis beispielsweise über 250°C geeignet sein.

Die Kernkörper können über den Hüllkörper insbesondere aus dem Glasfasergewebe mit speziellem Nahtmaterial umnäht sein, beispielsweise aus Kevlar oder aus Aramid-Nähgarn. Derartige Garne sind auch für Temperaturen bis beispielsweise 300°C einsetzbar.

Mit weiterem Vorteil können die Verbindungsmittel an den Dämmelementen angeordnete Laschen aufweisen, an denen die Kletteinrichtung oder der Reisverschluss angeordnet sind. Grenzen nach dem Aufbringen der Dämmelemente auf der Gehäusefläche zwei Dämmelemente über ihre Kanten aneinander, so kann eine der Kanten eine Lasche aufweisen, die über das benachbarte Dämmelement geschlagen wird. Im Überlappbereich kann dabei die Kletteinrichtung angebracht sein, beispielsweise mit einem Klettband an der Lasche und einem Flauschband auf der Oberfläche des Dämmelementes im Überlappungsbereich. Auch ist es denkbar, dass bei zwei aneinander grenzenden Dämmelementen eine untere Lasche eingerichtet ist, die mitunter am Gehäuse anliegt, und die beiden Dämmelemente verbindet, und eine zweite oberseitige Lasche, die folglich an der Außenseite der Dämmelemente beziehungsweise der Dämmeinrichtung angeordnet ist und die beiden Dämmelemente zusätzlich verbindet, und die jeweiligen Laschen können beispielsweise auch jeweilige Kletteinrichtungen umfassen. So können zwei aneinandergrenzende Dämmelemente mit zwei Laschen und jeweiligen Kletteinrichtungen verbunden werden.

Alternativ können die Laschen auch vereinzelt bereitgestellt werden und an beiden oder den mehreren zu verbindenden Dämmelementen lösbar angeordnet werden. Die einzelnen Laschen können zum Beispiel an beiden Randbereichen Kletteinrichtungen aufweisen oder diese sind vollflächig auf einer Seite der Laschen vorhanden, mit denen die Laschen nach der Anordnung der Dämmelemente am Medienaggregat an diese angeheftet, also angeklettet werden. Damit ergibt sich eine höhere Flexibilität bei der Anordnung und Verbindung der Dämmelemente mit den Laschen. Die Dämmelemente können beispielsweise an ihren Rändern auch standardmäßig ein Flauschband aufweisen, das als Gegenband zu der Kletteinrichtung dienen kann. Damit ist eine maximale Flexibilität gegeben, da die Laschen auch noch nachträglich in ihrer Position an den Dämmelenenten verändert und angepasst werden können.

Die Dämmelemente können gemäß dem Medienaggregat so konfektioniert sein, dass diese Öffnungen aufweisen können, durch die beispielsweise Leitungen, Rohre oder auch Anschlusselemente führbar sind und/oder durch die Bedienelemente des Medienaggregates von einer Person bedienbar sind. Die Dämmelemente müssen damit nicht ein geschlossenes Flächenelement bilden, sondern können Öffnungen umfassen, die kleine Bereiche des Gehäuses freilassen, oder die an hindurchgeführte Leitungen und Rohre bezüglich ihres Querschnittes angepasst sind. Dabei können die Dämmelemente auch geschlitzt ausgeführt sein, sodass diese ohne Demontage von Leitungen und Rohren auf einer Gehäusefläche angebracht werden können, aus der eine Leitung oder ein Rohr herausragt. Der Schlitz kann ebenfalls mit einer Lasche und beispielsweise einem Klettband wieder verschlossen werden.

Die Erfindung richtet sich ferner auf eine Dämmeinrichtung für ein Medienaggregat für Wäschereien, das eine Wärmeerzeugungseinrichtung für zumindest einen Wäschebehandlungsautomaten und ein Gehäuse aufweist, wobei das Gehäuse die Wärmeerzeugungseinrichtung umschließt, wobei erfindungsgemäß die Dämmeinrichtung dazu ausgebildet ist, dass diese auf der Außenseite des Gehäuses angeordnet wird. Die Dämmeinrichtung umfasst dabei zumindest ein Dämmelement, insbesondere mehrere Dämmelemente, das oder die mattenartig ausgebildet sind und einen Kernkörper und einen den Kernkörper umschließenden Hüllkörper aufweisen.

Weist die Dämmeinrichtung mehrere Dämmelemente auf, können diese mit Verbindungsmitteln miteinander verbunden werden, und es kann vorgesehen sein, dass dann, wenn das Gehäuse mehrere Gehäuseflächen aufweist, die Dämmelemente mit einem Format ausgebildet sind, mit dem diese an die jeweiligen Gehäuseflächen angepasst sind.

So kann vorgesehen sein, dass die mehreren Dämmelemente der Dämmeinrichtung mit den Verbindungsmitteln zusammengehalten sind, derart, dass diese mehreren Dämmelemente in zusammenhängendem Zustand an die Gehäuseflächen des Gehäuse angeordnet werden können, insbesondere mittels an den Dämmelementen angeordneten Laschen oder einem durchgehenden Hüllkörper, mithin also einem durchgehendem Hüllstoff. So können Dämmelemente dauerhaft über Verbindungsmittel miteinander verbunden sein, insbesondere also bereits bei der Herstellung der Dämmeinrichtung, oder es sind lösbare Verbindungsmittel vorgesehen, die beispielsweise über eine Kletteinrichtung oder vergleiche Verbindungsmittel miteinander verbunden werden, wenn die Dämmelemente an das Gehäuse angebracht sind. Auch ist es denkbar, dass die Dämmelemente Magnetelemente aufweisen, insbesondere kompakte Permanentmagnete oder Flächenmagnete, mit denen die Dämmelemente auf der Gehäusefläche des Gehäuses befestigbar sind.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein schematisiertes Beispiel eines Medienaggregates mit einer Dämmeinrichtung in einer Seitenansicht,
- Figur 2: eine perspektivische Ansicht eines Medienaggregates mit mehreren vereinzelt dargestellten Dämmelementen der Dämmeinrichtung,
- Figur 3: eine Ansicht eines mit einer Dämmeinrichtung verkleideten Medienaggregates in Anordnung auf einem Wäschebehandlungsautomaten,
- Figur 4: eine Abwicklung einer Dämmeinrichtung mit mehreren Dämmelementen, die über Verbindungsmittel zusammenhängen,
- Figur 5: eine Detailansicht von zwei auf der Gehäusefläche des Gehäuses eines Medienaggregates angeordneten Dämmelementen mit Verbindungsmitteln, umfassend Laschen an den Dämmelementen, die die Dämmelemente miteinander verbinden,
- Figur 6: eine quergeschnittene Ansicht mehrerer Dämmelemente mit den Kernkörpern und mit einem Hüllkörper, der über die mehreren Kernkörper durchgehend ausgebildet ist,
- Figur 7: ein Beispiel einer Klettverbindung zwischen zwei Dämmelementen, die auf einer Ebene gelagert sind,
- Figur 8: ein Beispiel einer Klettverbindung zwischen zwei Dämmelementen, die einen Versatz zueinander aufweisen und
- Figur 9: ein Beispiel einer Klettverbindung zwischen zwei Dämmelementen, die auf einer Ebene gelagert sind, wobei die Kletteinrichtung im Stoß zwischen den beiden Dämmelementen eingerichtet ist.

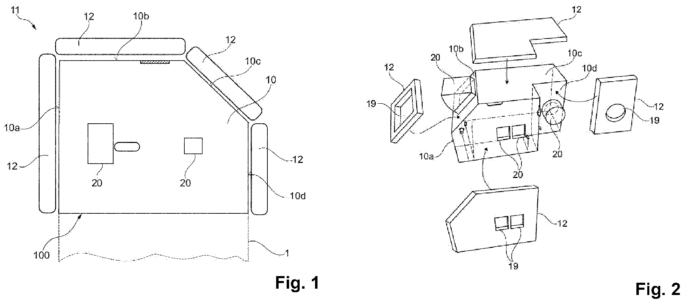

Figur 1 zeigt in schematischer Weise ein Medienaggregat 100 in Anordnung auf einem Wäschebehandlungsautomaten 1, wobei ein Gehäuse 10 des Medienaggregates 100 mit einer außenseitig auf diesem angeordneten Dämmeinrichtung 11 ausgeführt ist. Das Medienaggregat 100 weist eine nicht dargestellte Wärmeerzeugungseinrichtung auf, die von dem Gehäuse 10 umschlossen ist, wobei in der schematischen Darstellung lediglich eine Seitenansicht des Gehäuses 10 gezeigt ist.

Das Medienaggregat 100 ist mit einer Dämmeinrichtung 11 ausgestattet, die das Gehäuse 10 außenseitig umschließt. Die Dämmeinrichtung 11 ist aus mehreren Dämmelementen 12 aufgebaut, die lediglich schematisch dargestellt sind und die in nicht näher gezeigter Weise auch miteinander verbunden sein können. Ferner ist in der schematischen Darstellung keine Befestigungsweise dargestellt, in welcher Art die Dämmelemente 12 auf dem Gehäuse 10 angebracht sind, worauf später eingegangen wird.

Das Gehäuse 10 weist beispielhaft mehrere Gehäuseflächen 10a, 10b, 10c und 10d auf, und jeder dieser Gehäuseflächen 10a, 10b, 10c und 10d ist ein Dämmelement 12 zugeordnet. Die Dämmelemente 12 bilden flächenartig ausgeführte Matten, die an den Gehäuseflächen 10a, 10b, 10c und 10d anliegen und die in ihrem Format an die Gehäuseflächen 10a, 10b, 10c und 10d angepasst sind.

Das Medienaggregat 100 dient zur Bereitstellung von Heißluft, mit der der Wäschebehandlungsautomat 1 betrieben werden kann. Insofern können in nicht näher dargestellter Weise Heißluftleitungen zwischen dem Medienaggregat 100 und dem Wäschebehandlungsautomaten 1 eingerichtet sein, wobei auch ein Umluftanteil vorgesehen sein kann, sodass auch eine Luftführung vom Wäschebehandlungsautomaten 1 in das Medienaggregat 100 eingerichtet sein kann. Das Medienaggregat 100, das auch als Medienteil bezeichnet wird, ist oberseitig auf dem Wäschebehandlungsautomaten 1 angeordnet, sodass die untere, bodenseitige Fläche des Gehäuses des Medienaggregates 100 kein Dämmelement 12 aufweist und insbesondere das Gehäuse 10 im unteren Bereich auch keine geschlossene Gehäusefläche besitzt.

Die auf der Vorderseite des Gehäuses 10 dargestellten Anschlusselemente 20 können Rohleitungen, Anschlüsse oder Bedienelemente umfassen, und wird auf der Vorderseite des Gehäuses 10 in nicht näher dargestellter Weise ein Dämmelement angeordnet, kann dieses Dämmelement an die Anschlusselemente 20 angepasste Öffnungen aufweisen, die insofern auch bei angeordneter Dämmeinrichtung 11 frei und zugänglich bleiben.

Figur 2 zeigt in einer perspektivischen Ansicht das Medienaggregat 100 mit mehreren Gehäuseflächen 10a, 10b, 10c und 10d, und es sind mehrere Dämmelemente 12 gezeigt, die an das jeweilige Flächenformat der Gehäuseflächen 10a, 10b, 10c und 10d angepasst sind. So können diese an die jeweiligen Gehäuseflächen 10a, 10b, 10c und 10d passgenau angebracht werden, und die Dämmelemente 12 können in nachstehend gezeigter Weise miteinander verbunden werden. Insbesondere können die Übergänge zwischen den Dämmelementen 12 noch mit Verbindungsmitteln versehen sein, über die auch eine weiter verbesserte Thermo- und/oder Schallisolierung erreicht wird. Dargestellt sind beispielhaft Anschlusselemente 20, beispielsweise Bedienelemente oder Luftkanäle, und beispielhaft gezeigte Dämmelemente 12 sind in Anpassung an die Gehäuseoberfläche 10b mit je einer komplementären Öffnung 19 passend zum Format des Anschlusselementes 20 ausgeführt. Gleiches gilt für das vorderseitige Dämmelement 12, das entsprechende Öffnungen 19 für Anschlusselemente 20 oder Bedienelemente umfasst.

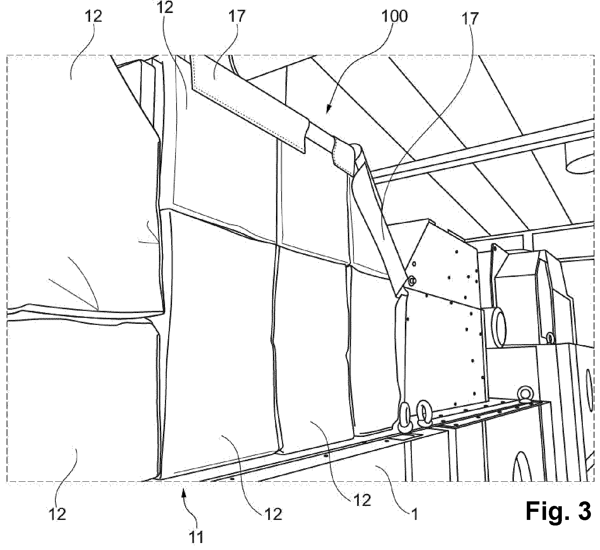

Figur 3 zeigt ein fertig isoliertes Medienaggregat 100 mit der Dämmeinrichtung 11 umfassend mehrere Dämmelemente 12. Unterseitig ist ein Wäschebehandlungsautomat 1 dargestellt, beispielsweise eine Mangel, ein Tunnelfinisher oder ein Trockner. Zu sehen sind mehrere mattenartige Dämmelemente 12, die aneinander angrenzen und damit ein Thermo-Jacket des Medienaggregates 100 bilden.

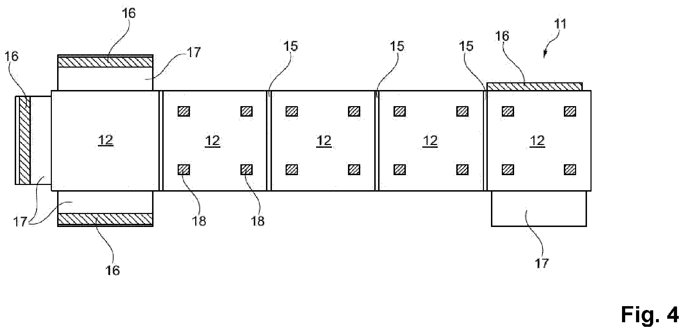

Figur 4 zeigt eine Abwicklung einer Dämmeinrichtung 11 mit mehreren Dämmelementen 12, die über Verbindungsmittel 15 miteinander verbunden sind. Beispielhaft weisen das ganz links dargestellte und das ganz rechts dargestellte Dämmelement 12 an ihren Außenkanten angebrachte Laschen 17 auf, an denen wiederum Kletteinrichtungen 16 angebracht sind. Ferner besitzen die Dämmelemente 12 teilweise angeordnete Magnetelemente 18, über die die Dämmelemente 12 auf der Oberfläche des Gehäuses des Medienaggregates angehaftet werden können.

Wird die Dämmeinrichtung 11 gemäß der Darstellung um einen kubusartig, würfelartig, trapezartig oder in sonstiger geometrischer Ausgestaltung ausgeführtes Medienaggregat angeordnet, so sind die Dämmelemente 12 den jeweiligen insbesondere planen Gehäuseflächen des Gehäuses angepasst. Die Laschen 17 mit den Kletteinrichtungen 16 sind dabei so angeordnet, dass erst nach der Anbringung benachbarte Dämmelemente 12 miteinander verbunden werden können. Hierfür werden die Laschen 17 über das benachbarte Dämmelement 12 überlappend geschlagen, und die Kletteinrichtung 16 weist ein Klettband und ein Flauschband auf, sodass in an sich bekannter Weise die Kletteinrichtung geschlossen werden kann. Dabei können die Laschen 17 über die Kletteinrichtungen so festgezogen werden, dass die Dämmelemente 12 fest auf den Gehäuseflächen des Gehäuses aufliegen.

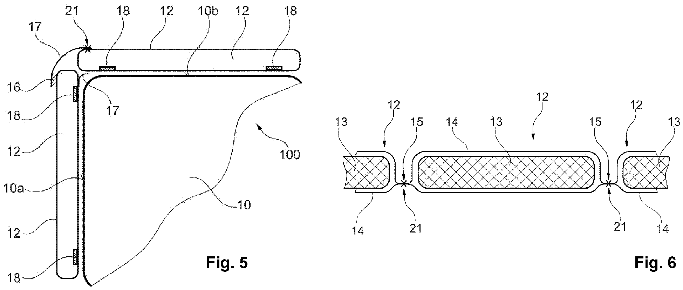

Figur 5 zeigt eine beispielhafte Ansicht von zwei Dämmelementen 12 auf den Gehäuseflächen 10a und 10b eines teildargestellten Gehäuses 10 eines Medienaggregates 100. Die Dämmelemente 12 weisen Magnetelemente 18 auf, über die die Dämmelemente 12 auf der Oberfläche 10a, 10b des Gehäuses 10 angeheftet werden. Ferner sind eine innere Lasche 17 und eine äußere Lasche 17 gezeigt, wobei die äußere Lasche 17 über die Naht 21 am oberen Dämmelement 12 angenäht ist, und diese ist über das seitlich angeordnete Dämmelement 12 geschlagen. Im Überlappbereich zwischen dem seitlichen Dämmelement 12 und der Lasche 17 befindet sich die Kletteinrichtung 16 zur Befestigung der Lasche 17. In gleicher Weise kann auch die innere Lasche 17 zwischen den beiden Dämmelementen 12 befestigt sein, was in der Ansicht nicht im Detail dargestellt ist.

Die gezeigten Laschen 17 sind an den Dämmelementen 12 mittels einer beispielhaft gezeigten Naht 21 angebracht. Alternativ können die Laschen 17 an den Dämmelementen 12 auch über mehrere Kletteinrichtungen 16 anbringbar sein, sodass die Laschen 17 von den Dämmelementen 12 vereinzelbar sind.

Die Dämmelemente 12 sind so gezeigt, dass diese auf der Verbindungsecke des Gehäuses 10 des Medienaggregates 100 im Eck aneinander stoßen. Es wäre dabei auch denkbar, dass sich die Dämmelemente 12 gegenseitig überlappen, sodass etwa das oberseitige Dämmelement 12 das vertikale Dämmelement 12 überragt oder das vertikale Dämmelement 12 überragt das oberseitige Dämmelement 12, sodass die Dämmelemente 12 etwa um die Dicke derselben länger bzw. breiter sind. Damit würde eine noch besser Wärme- und/oder Schallisolierung erreicht werden und die Laschen 17 könnten kürzer ausfallen als in der Darstellung gezeigt.

Figur 6 zeigt schließlich eine quergeschnittene Seitenansicht durch mehrere Dämmelemente 12, die jeweils einen Kernkörper 13 und einen Hüllkörper 14 aufweisen. Das Beispiel zeigt dabei einen Hüllkörper 14 mit einer durchgehenden Erstreckung, wodurch Verbindungsmittel 15 entstehen, die quasi gelenkartig die jeweiligen Dämmelemente 12 miteinander verbinden. Beispielsweise sind die oberen und unteren Hüllkörper 14, mithin also textiles oder sonstiges Flächenmaterial, beispielsweise Glasfasergewebe, über eine Naht 21 miteinander vernäht, sodass das Verbindungsmittel 15 entsteht. In alternativer Ausgestaltung können die dargestellten Dämmelemente 12 im Bereich der Verbindungsmittel 15 auch Kletteinrichtungen aufweisen.

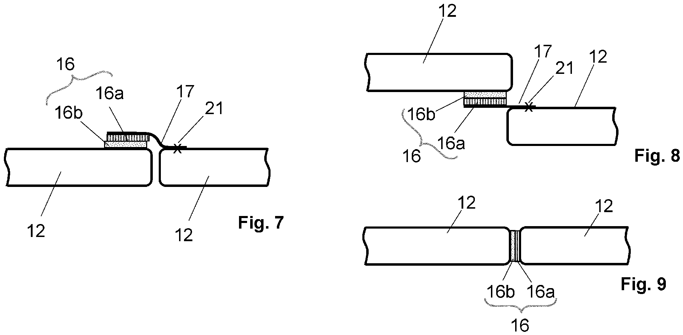

Figur 7 zeigt ein Beispiel einer Klettverbindung mit einer Kletteinrichtung 16 zwischen zwei Dämmelementen 12, die auf einer Ebene gelagert sind. Die Kletteinrichtung 16 befindet sich dabei zwischen der Oberseite des linken Dämmelementes 12 und einer Lasche 17, die mittels einer Naht 21 an der Oberseite des rechten Dämmelementes 12 angebracht ist. Die Kletteinrichtung 16 weist ein Klettband 16a und ein Flauschband 16b auf, die auf an sich bekannter Weise miteinander verbunden sind. Das Klettband 16a ist auf der Innenseite der Lasche 17 und das Flauschband 16b auf der Oberseite des linken Dämmelementes 12 angebracht ist.

Figur 8 zeigt ein Beispiel einer Klettverbindung mit einer Kletteinrichtung 16 zwischen zwei Dämmelementen 12, die einen Versatz zueinander aufweisen. Die Kletteinrichtung 16 befindet sich dabei im Bereich des Versatzes zwischen der Unterseite des linken Dämmelementes 12 und einer Lasche 17, die mittels einer Naht 21 an der Oberseite des rechten Dämmelementes 12 angebracht ist. Die Kletteinrichtung 16 weist auch hier wieder ein Klettband 16a und ein Flauschband 16b auf. Das Klettband 16a ist auf der Oberseite der Lasche 17 und das Flauschband 16b auf der Unterseite des linken Dämmelementes 12 angebracht.

Die Figur 9 zeigt ein Beispiel einer Klettverbindung mit einer Kletteinrichtung 16 zwischen zwei Dämmelementen 12, die auf einer Ebene gelagert sind, wobei die Kletteinrichtung 16 im Stoß zwischen den beiden Dämmelementen 12 eingerichtet ist. In den Seitenbereichen der Dämmelemente 12 sind dabei einmal das Klettband 16a und einmal das Flauschband 16b angenäht, die sodann auf an sich bekannter Weise miteinander verbunden werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Wäschebehandlungsautomat

- 10: Gehäuse
- 10a: Gehäuseoberfläche
- 10b: Gehäuseoberfläche
- 10c: Gehäuseoberfläche
- 10d: Gehäuseoberfläche
- 11: Dämmeinrichtung
- 12: Dämmelement
- 13: Kernkörper
- 14: Hüllkörper
- 15: Verbindungsmittel
- 16: Kletteinrichtung
- 16a: Klettband
- 16b: Flauschband
- 17: Lasche
- 18: Magnetelement
- 19: Öffnung
- 20: Anschlusselement
- 21: Naht

- 100: Medienaggregat

## Patentansprüche

1. Medienaggregat (100) für Wäschereien, das eine Wärmeerzeugungseinrichtung für zumindest einen Wäschebehandlungsautomaten (1) und ein Gehäuse (10) aufweist, wobei das Gehäuse (10) die Wärmeerzeugungseinrichtung umschließt,
**dadurch gekennzeichnet,**
**dass** das Gehäuse (10) auf der Außenseite eine Dämmeinrichtung (11) zur Wärme- und Schallisolierung aufweist.

2. Medienaggregat (100) nach Anspruch 1,
**dadurch gekennzeichnet,**
**dass** die Dämmeinrichtung (11) zumindest ein Dämmelement (12) aufweist, das auf der Außenseite des Gehäuses (10) anliegt.

3. Medienaggregat (100) nach Anspruch 1 oder 2,
**dadurch gekennzeichnet,**
**dass** das Dämmelement (12) mattenartig ausgebildet ist und einen Kernkörper (13) und einen den Kernkörper (13) umschließenden Hüllkörper (14) aufweist.

4. Medienaggregat (100) nach einem der Ansprüche 1 bis 3,
**dadurch gekennzeichnet,**
**dass** die Dämmeinrichtung (11) mehrere Dämmelemente (12) aufweist, die mit Verbindungsmitteln (15) miteinander verbunden sind.

5. Medienaggregat (100) nach Anspruch 4,
**dadurch gekennzeichnet,**
**dass** das Verbindungsmittel (15) wenigstens eine Kletteinrichtung (16) oder einen Reisverschluss umfasst.

6. Medienaggregat (100) nach Anspruch 4 oder 5,
**dadurch gekennzeichnet,**
**dass** das Gehäuse (10) mehrere Gehäuseflächen (10a, 10b, 10c, 10d) aufweist, wobei die Dämmelemente (12) ein Format aufweisen, mit dem diese an die Gehäuseflächen (10a, 10b, 10c) angepasst sind.

7. Medienaggregat (100) nach einem der vorgenannten Ansprüche, **dadurch gekennzeichnet,**
**dass** mehrere Dämmelemente (12) mit den Verbindungsmitteln (15) zusammengehalten sind, derart, dass diese mehreren Dämmelemente (12) in zusammenhängendem Zustand an die Gehäuseflächen (10a, 10b, 10c, 10d) des Gehäuse (10) angeordnet werden können.

8. Medienaggregat (100) nach einem der vorgenannten Ansprüche, **dadurch gekennzeichnet,**
**dass** die Dämmelemente (12) Magnetelemente (18), insbesondere kompakte Ferritmagnete oder Flächenmagnete aufweisen, mit denen die Dämmelemente (12) auf der Gehäusefläche (10a, 10b, 10c, 10d) des Gehäuses (10) befestigbar sind.

9. Medienaggregat (100) nach einem der vorgenannten Ansprüche, **dadurch gekennzeichnet,**
**dass** der Kernkörper (13) des Dämmelementes (12) eine Mineralwolle aufweist, insbesondere die eine Flächendicke von 20mm bis 150mm, vorzugsweise von 30mm bis 100mm, besonders bevorzugt von 40mm bis 70mm und am meisten bevorzugt von 45mm bis 55mm aufweist.

10. Medienaggregat (100) nach einem der vorgenannten Ansprüche, **dadurch gekennzeichnet,**
**dass** der Hüllkörper (14) des Dämmelementes (12) ein Glasfasergewebe aufweist, insbesondere ein Glasfasergewebe mit einer nicht brennbaren Eigenschaft und einem Flächengewicht von 400g/m2 bis 800g/m2, vorzugsweise von 500g/m2 bis 700g/m2 und besonders bevorzugt von 550g/m2 bis 600g/m2.

11. Medienaggregat (100) nach einem der vorgenannten Ansprüche, **dadurch gekennzeichnet,**
**dass** die Verbindungsmittel (15) frei anbringbare oder an den Dämmelementen (12) angeordnete Laschen (17) aufweisen, an denen die Kletteinrichtung (16) oder der Reisverschluss angeordnet sind und/oder dass die Dämmelemente (12) Öffnungen (19) aufweisen, durch die Leitungen, Rohre und/oder Anschlusselemente (20) führbar sind oder durch die Bedienelemente des Medienaggregates (100) bedienbar sind.

12. Dämmeinrichtung (11) für ein Medienaggregat (100) für Wäschereien, das eine Wärmeerzeugungseinrichtung für zumindest einen Wäschebehandlungsautomaten (1) und ein Gehäuse (10) aufweist, wobei das Gehäuse (10) die Wärmeerzeugungseinrichtung umschließt,
**dadurch gekennzeichnet,**
**dass** die Dämmeinrichtung (11) dazu ausgebildet ist, dass diese auf der Außenseite des Gehäuses (10) angeordnet wird.

13. Dämmeinrichtung (11) nach Anspruch 12,
**dadurch gekennzeichnet,**
**dass** die Dämmeinrichtung (11) zumindest ein Dämmelement (12) aufweist, das mattenartig ausgebildet ist und einen Kernkörper (13) und einen den Kernkörper (13) umschließenden Hüllkörper (14) aufweist.

14. Dämmeinrichtung (11) nach Anspruch 12,
**dadurch gekennzeichnet,**
**dass** die Dämmeinrichtung (11) mehrere Dämmelemente (12) aufweist, die mit Verbindungsmitteln (15) miteinander verbunden sind und/oder dass das Gehäuse (10) mehrere Gehäuseflächen (10a, 10b, 10c) aufweist, wobei die Dämmelemente (12) mit einem Format ausgebildet sind, mit dem diese an die Gehäuseflächen (10a, 10b, 10c, 10d) angepasst sind.

15. Dämmeinrichtung (11) nach einem der Ansprüche 12 bis 14,
**dadurch gekennzeichnet,**
**dass** mehrere Dämmelemente (12) mit den Verbindungsmitteln (15) zusammengehalten sind, derart, dass diese mehreren Dämmelemente (12) in zusammenhängendem Zustand an die Gehäuseflächen (10a, 10b, 10c, 10d) des Gehäuse (10) angeordnet werden können, insbesondere mittels an den Dämmelementen (12) angeordneten Laschen (17) und/oder wobei die Dämmelemente (12) Magnetelemente (18), insbesondere kompakte Ferritmagnete oder Flächenmagnete aufweisen, mit denen die Dämmelemente (12) auf der Gehäusefläche (10a, 10b, 10c) des Gehäuses (10) befestigbar sind.
